# EUROPEAN PATENT APPLICATION

(11) **EP 4 657 182 A1**
(43) Date of publication of application: **03.12.2025**
(21) Application number: 24178212.7
(22) Date of filing: 27.05.2024
(51) Int. Cl.: G05B 15/02, G06F 8/38

(54) **METHOD FOR ADAPTING CONFIGURATION DATA FOR CONFIGURING A ROOM OPERATING UNIT FOR OPERATING ELECTRICAL DEVICES INSIDE A ROOM OF A BUILDING**

(71) Applicant: ABB SCHWEIZ AG, 5400 Baden (CH)
(72) Inventor: BORRISON, Reuben, 68782 Brühl (DE); ALEKSY, Markus, 67065 Ludwigshafen (DE); DIX, Marcel, 78476 Allensbach (DE); KRUMMEL, Holger, 58515 Lüdenscheid (DE); LEHNERT, Christian, 58239 Schwerte (DE); SCHÄFER, Jan, 58515 Lüdenscheid (DE)
(74) Representative: Maiwald GmbH

(57) **Abstract**

The disclosure relates to a method (200) for adapting configuration data (3) for configuring a room operating unit (16) for operating electrical devices (14) inside a room (12) of a building (10), the method (200) comprising:
- obtaining current configuration data (3) for configuring the room operating unit (16);
- obtaining usage data (4) indicative of a usage of the room operating unit (16) based on the current configuration data (3);
- obtaining instruction data (2) comprising one or more instructions for processing the usage data (4) and the current configuration data (3) by an Artificial Intelligence, Al, processing component (42) for obtaining the adapted configuration data (3');
- providing the current configuration data (3), the usage data (4) and the instruction data (2) for processing by the AI processing component (42); and
- obtaining the adapted configuration data (3') from the processing by the AI processing component (42).

## Description

### TECHNICAL FIELD

The present invention relates to a method for adapting configuration data for configuring a room operating unit for operating electrical devices inside a room of a building, one or more computer program products, and a data processing system.

### BACKGROUND

Building management systems are being used for management of a variety of buildings, including commercial and residential buildings. Particularly for commercial buildings such as but not limited to, for example, office buildings, retail buildings, hospitality buildings, such as hotels and movie theatres, healthcare buildings, such as hospitals and clinics, educational buildings, such as schools and universities, and industrial buildings, such as factories, workshops, buildings may utilize a building management system. All of these examples of buildings comprise several electrical devices, for example, sensors, control units, in particular actuators, and other devices or components, which are being used in the buildings to provide comfort to the users of the buildings, to enable fulfilling the function of the buildings and similar.

For example, typically, commercial buildings are supplied with different kinds of technical systems, e.g., Heating, Ventilation and Air Conditioning, HVAC, systems for which different sensors, e.g., temperature sensors, and control units, e.g., temperature control units, and actuators, e.g., pumps, valves, etc. are being used. These are distributed spatially throughout the building, in particular in different rooms and on different floors thereof. Additionally, commercial buildings are often supplied with many different kinds of systems such as but not limited to lighting systems, e.g., including lighting control units, lighting devices, etc., electrical systems, e.g., electricity control units, electrical sockets, access control systems, security and alarm systems, shading and glazing systems, and many different kinds of systems for ensuring comfort of the users of the buildings and/or for ensuring that a function or purpose of the building is met.

Generally, the building management system may serve the purpose of managing or controlling the technical systems of the building. All of the aforementioned technical systems may have hundreds, thousands or more devices, in particular electrical devices, inside a building, which may be required to be managed or, in other words, controlled depending on the size and type of the building. Thus, the building management system may control the operation of thousands of electrical devices such as actuators, sensors, and similar based on different user input, schedules, measurements or sensor readings and so on. A building controlled by a building management system is often referred to as an intelligent building or a smart building. Also known as building automation systems, BAS, or building energy management systems, BEMS, the MS may be the semi or fully automated centralized control of a building's HVAC, electrical, lighting, shading, access control, security systems, and other, potentially interrelated, technical systems of the building.

Still, even if building management systems are managing the technical systems and their electrical devices throughout the building, it is advantageous to provide individual room operating units in each room or at least some of the rooms of the building. By means of these individual room operating units, of which one or more may be in a room, the electrical devices of that room may be operated or, in other words, their operation may be controlled. For example, the electrical devices may be turned on and off by means of the room operating unit. In other examples, and depending on the electrical device to be controlled, a timer for an operation may be set or specific operating parameters, such as a light intensity or color in the example of a light source as electrical device or a temperature in the case of a thermostat as electrical device, may be set. Also, even without having a building management system, it may be desirable to provide individual control to an occupant or user of a room inside a building by using a room operating unit, which is connected to the electrical devices for control thereof.

Typically, the room operating unit needs to be provided with a control configuration such that it may work properly. For example, this may include providing or programming software for the control configuration, which, based on a user input received at the room operating unit, controls the operation of the electrical devices inside the room. The user input may be indicative of a user's desire to operate a certain electrical device in a certain way, e.g., a thermostat for increasing the room temperature to a specific temperature. Additionally, a room operating interface, e.g., in the form of or comprising a user layout, may be required on the room operating unit, in particular to be displayed by a display thereof. For example, the display may be a touch display for receiving the user input and/or other or additional input means such as buttons, scroll wheels, and similar may be provided on the room operating unit. Such room operating interface may need to be connected to the control configuration.

In any case, typically, for each room, depending on its individual configuration of electrical devices, e.g., their number, location, functions, locations, etc., an individual configuration in terms of both, the control configuration and the room operating interface is required for each room. Typically, a system integrator or installer provides the initial configuration of the room operating units. Depending on the number of rooms in a building, this process may be very time-consuming and prone to error. Additionally, once the system integrator has installed the initial configuration, it may not or only in a limited way be individually customized by the operator of the building or the users thereof, in particular the occupants of the rooms having the room operating units. Often, such adaptation of the configuration of the room operating unit is cumbersome for the user or the operator of the building and thus, it is not being performed, despite that a current configuration may be potentially not working correctly or at least not in an optimized way reflecting the usage by the operator of the building or their occupants.

### SUMMARY

The above problem is at least partially solved or alleviated by the subject matters of the independent claims of the present disclosure, wherein further examples are incorporated in the dependent claims.

According to an aspect of the present disclosure, there is provided a method for adapting configuration data for configuring a room operating unit for operating electrical devices inside a room of a building, the method comprising:
- obtaining current configuration data for configuring the room operating unit;
- obtaining usage data indicative of a usage of the room operating unit based on the current configuration data;
- obtaining instruction data comprising one or more instructions for processing the usage data and the current configuration data by an Artificial Intelligence, Al, processing component for obtaining the adapted configuration data;
- providing the current configuration data, the usage data and the instruction data for processing by the Al processing component; and
- obtaining the adapted configuration data from the processing by the AI processing component.

Hence, the method provides for adapting current or, in other words, existing configuration data for configuring a room operating unit for operating electrical devices inside a room of a building by using an artificial intelligence, Al, processing component, which may in particular be in the form of a machine learning, ML, processing component. As input for that Al processing component, which may be implemented in software and/or hardware, the current or existing configuration data, usage data and instruction data are provided. The artificial intelligence, Al, in particular machine learning, ML, processing component may thus, e.g., based on neural networks, deep learning techniques and similar, adapt the current configuration data based on the usage data and according to the one or more instructions, which may for example give context data, on how the processing should be done or what result is to be expected, e.g., that the AI processing component shall adapted the current configuration data to reflect the usage data.

The instruction data or their one or more instructions may be in the form of one or more prompts. Prompts are specific instructions for on how to handle the data, in this case the current configuration data and the usage data, provided together with the instructions. In particular, the instruction data, in particular in the form of the one or more prompts, may define the expected result of the processing of the first configuration data by the AI processing component. For example, the instruction data or prompt(s) may define or request from the AI processing component that the expected result is adapted configuration data for configuring a room operating unit based on the usage of the room operating unit as indicated by the usage data. For example, the instruction data may comprise or indicate relevant information in this regard, e.g., technical details of the room operating unit, such as but not limited to, display size and/or display resolution of a display of the room operating unit and/or processing power of a processor of the room operating unit. Additionally, or alternatively, the instruction data may comprise or indicate the form in which the adapted configuration data shall be provided, e.g., as text and/or images, as computer code or, in other words, software code, and similar. For example, the form of the adapted configuration data may be remained the same as the current configuration data or parts may be amended, deleted or added thereto, e.g., new text and/or images. Such instruction data may herein also be referred to as context information. Also, or alternatively, the instruction data may comprise or indicate one or more exemplary, e.g., adapted, configuration data, that may already be existing for a room operating unit and have been adapted to the usage of the room operating unit, as examples for the AI processing component on how the result of the processing by the AI processing component shall be. Alternatively, or additionally, the AI processing component may be trained with different current configuration data, usage data, adapted configuration data and/or instruction data such that it is configured specifically to generate adapted configuration data.

In an example, the usage data may be indicative of a usage pattern of one or more of the electrical devices inside the room and the instruction data may be configured such that the adapted configuration data reflects the usage pattern. In other words, the usage data may be representing a pattern of usage by one or more users or occupants of the room, in particular over a period of time. The instruction data or the one or more instructions thereof may give the AI processing component the instruction(s) to generate adapted configuration data, which is based or, in other words, reflects the usage pattern. For this purpose, the AI processing component may reorganize the current configuration data, add new objects, remove objects, replace objects and similar, as described further below herein.

In an example, the current configuration data and/or the adapted configuration data may be indicative of a control configuration for controlling the electrical devices by the room operating unit. For example, the control configuration may be at least partially in the form of a computer or software code. The AI processing component may be able to generate that computer or software code. When the control configuration is executed or used by the room operating unit, the electrical devices inside the room may be controlled in their operation, in particular based on a user input. The control configuration may be the link between the electrical devices and the user input, as may be provided based on a room operating interface displayed by a displayed of the room operating unit. For example, the user may provide a user input on an input means, e.g., a display in the form of a touch display, indicate of a certain operation of one or more electrical devices inside the room. The control configuration may be able to transfer that user input into an instruction for the electrical device(s) requested to operate according to the user input, wherein the instruction may be based on computer code and/or an electrical control signal. For example, the control configuration, which may be executed on a processor of the room operating unit, may be able to instruct a control device inside the room operating unit to generate a corresponding electrical control signal and to send it to the electrical device(s) required to receive them to operate as requested by the user based on the user input.

In an example, the current configuration data and/or the adapted configuration data may be indicative of a room operating interface to be displayed by a display of the room operating unit. The room operating interface may be a user interface, in particular a visual user interface. It may show information indicative of the available electrical devices inside the room and/or the control operations of the electrical devices inside the room. By selecting items or objects in the room operating interface through user input on an input means, e.g., a touch display of the room operating unit and/or buttons, control wheels, and similar, the user may be able to control the respective electrical devices. The room operating interface may be in the form of or comprise a layout. Such layout may comprise the items or objects, which may be representing the electrical devices and information associated therewith, in particular their functions, locations inside the room and/or relationships. The items or objects may be in the form of text and/or images or pictures. Images or objects include icons or artefacts of images or pictures. The images or pictures may be representative of or relate to the type or function of the electrical device. For example, if the electrical device is a thermostat, the image may show a thermometer or similar, or if the electrical device is a lighting device, the image may show a bulb or similar.

In an example, at least one of the one or more instructions of the instruction data may be indicative of an adapted configuration of the room operating interface. For example, the one or more instructions may be or comprise context data. Such context data may instruct the AI processing component that the result shall be adapted configuration data adapted based on the usage data to better reflect the actual usage pattern of the user(s) or occupant(s) of the room. Such context data may include room operating interfaces or layouts thereof from other room operating units. Alternatively, or additionally, the one or more instructions may indicate the images or pictures to be used, e.g., a style thereof or exact images or pictures to be used. Alternatively, or additionally, the one or more instructions may indicate the text to be used, e.g., a style thereof, e.g., font, bold text or not, underlined text or not, and similar.

In an example, the current configuration data and/or the adapted configuration data may be indicative of objects representing the electrical devices and/or functions of the electrical devices in the room operating interface. Similarly, as previously mentioned, objects or, in other words, items may be representing the relationship between the electrical devices. In any case, these objects or items allow a user to quickly identify the relevant electrical devices, their functions, and/or their relationships between each other, such that the user may intuitively control the room operating unit and thereby the electrical devices. Objects may also represent the functions of several electrical devices, e.g., in the form of an action of several electrical devices to be performed by carrying out functions thereon. For example, in case of two or more lighting devices as electrical devices, an action may be a light scene, where the lighting devices may be operated simultaneously, e.g., with different or same light parameters. Such object may for example relate to a preference or setting of the user, which the user may favour and regularly use when controlling the operation of the electrical devices via the room operating unit. However, the room operating unit may not be providing on its room operating interface a quick or convenient object relating to such user preference or setting. Programming this by the user may be very cumbersome and not intuitive, so the user may always have to provide this preferred setting by using a combination of user inputs, e.g., touching different objects for different functions and electrical devices on a touch display of the room operating unit. With the proposed method, however, the usage data may be indicative of the preferences or previous settings of the user. Accordingly, using the Al processing component, the current configuration data may be adapted without requiring the user to perform cumbersome and complex individualization of the room operating interface themselves. The objects being indictive of functions of the electrical devices may also include several functions of the same or different electrical devices, which may be combined with each other, e.g., in a certain sequence.

In an example, the adapted configuration data may comprise at least one more or, in other words, added object compared to the current configuration data. In turn, another object may be deleted or moved to another place inside or on the room operating interface. For example, such added object may be reflecting the previous example of a setting or preference of a user, which they may regularly use, e.g., of a certain lighting scene in the room. The added object may, when being touched on a touch display of the room operating unit, for example, control the operation of electrical devices and/or functions linked thereto, e.g., via the control configuration. Hence, in the example of the lighting scene, once the user touches the added object, the lighting devices will be operated according to his preference, without them needing to communicate to the room operating unit or any other unit that this is a preference and without adjusting any settings on the room operating unit themselves. Note that the examples given herein in the form of the lighting devices and the lighting scene, for example, are merely exemplary and very detailed and under no circumstances are intended to limit the scope of the present disclosure. The skilled person will understand that any of the herein mentioned electrical devices and any similar electrical devices may be operated based on a room operating interface, in particular user interface, which may be customized by one or more objects representing these and/or their functions, such that the room operating interface may be customized by adapting the current configuration data in numerous and potentially an unlimited number of ways depending on the configuration of electrical devices inside a given room.

In an example, the current configuration data may have been obtained from an AI processing component using first configuration data from a building management system of the building, the first configuration data being indicative of a configuration of the electrical devices inside the room. The AI processing component may be the same as the one used for the adapting of the current configuration data or a different one. Generally, the method may also comprise the obtaining of the current configuration data by providing the first configuration data and instruction data comprising one or more instructions for processing the first configuration data by the AI processing component for obtaining the current configuration data to the AI processing component and obtaining it therefrom.

The current or adapted configuration data may be herein differentiated from the mentioned first configuration data in referring to it as the second configuration data, either current or adapted, wherein first or second does not include any limitation as to the reference of first and second but is merely intended to distinguish the configuration data from one another, namely, one being for the room operating unit, while the other one may be from a building management system, for example. When only configuration data is mentioned herein, unless otherwise mentioned, the second configuration data is meant. While the second configuration data may be the one for configuring, in particular configured for, configuring the room operating unit, the first configuration data may be indicative of, in particular comprise, a configuration of the electrical devices inside the room, e.g., from the building management system of the building.

The first configuration data may be from a building management system of the building. This may mean that it is originating from the building management system, which may be implemented in hardware and/or software. This does not necessarily but optionally include that it is directly extracted therefrom. For example, the first configuration data may also be stored in a database separate from the building management system. The building management system may have any configuration as explained herein, including the background section.

The first configuration data may be indicative of at least parts of an information model or comprise at least parts of or an entire information model. In particular, the information model may be a building information model. In any case, the information model may be understood as digital data and/or used for a digital representation of the building with all of its technical systems. The information model or generally the first configuration data may have any form, such as but not limited to, text, e.g., natural language, computer code, data tables, structured data, functions, diagrams, graphs, e.g., illustrating the relationship between the electrical devices and rooms inside the building. In particular, the information model may be digital data and/or, in particular indicative of, a digital representation of physical and functional characteristics of entities or objects, such as electrical devices of the building, which may be used in the planning, designing, construction, operation, and/or maintenance of the building. Hence, the information model may generally be used in the full lifecycle management of a building and its devices within its technical systems.

In an example, the configuration of the electrical devices may comprise one or more of: a location of the electrical devices inside the building, e.g., inside and/or outside the room (which may include an on outer side of the building, e.g., a solar panel or weather sensor on its roof), a function of the electrical devices, or a relationship between the electrical devices. Hence, the first configuration data may provide all relevant technical data, which may be required for configuring the room operating unit correctly, i.e., such that the user input provided on the room operating unit results in performing a function of an electrical device as expected by a user based on their user input, the electrical device being at a location expected by the user based on their user input and/or, in the case of multiple electrical devices, the electrical devices working together as expected by the user based on their user input. The function of the electrical devices may for example be a lighting function, a room temperature control function, and so on depending on the type of the electrical device. The relationship may for example be a connection and/or dependency between the different electrical devices. For example, a relationship in case of lighting devices as electrical devices may be that lighting devices may only be switched on and off together because they are electrically connected to each other in series.

In an example, the electrical devices may be at least from one or more of: a lighting device, an HVAC device, an electricity supply device, a sensor device, or a control device. The lighting device may provide light inside a room. The HVAC, Heating, Ventilation and Air Conditioning, device, may be configured to provide any one or more of heating, ventilation and air conditioning inside the room. The electrical supply device may provide electrical supply, e.g., at one or more electrical sockets as electrical devices, inside the room, e.g., they may be switched on and off. The sensor device may be configured for measurement of any parameter inside the room, e.g., temperature, humidity, and similar. The control device may be for example any actuator, which may be used inside the room to perform a certain function, e.g., an actuator for controlling shading and glazing or locking a door, for example.

In an example, the adapted configuration data may be applied or, in other words, executed on a room operating unit. By applying the adapted configuration data on the room operating unit, the room operating unit may be configured, in particular based on the usage or usage pattern and thereby the preferences of the user since the configuration data was adapted based on the usage data.

In an example, the artificial intelligence, Al, processing component may be a generative AI processing component based on at least one Large Language Model, LLM. The generative AI processing component may be implemented in or provided as software and executed on the same data processing apparatus as the one which may be executing the method of the first aspect or on a different one or several different ones, for example. For example, the AI processing component may be executed on distant or remote servers, which may have increased data processing capabilities and storages for storing one or more LLMs. Alternatively, these may be locally stored and executed. The generative AI processing component may be trained with or based on any LLM, e.g., general LLM and/or LLM specific for configuration data. Hence, the generative AI processing component may be any generative AI processing component such as provided by OpenAI, Microsoft, Google and others, e.g., ChatGPT, Google Gemini or Bard, and similar. Or, alternatively, the generative AI processing component may be trained with or based on open source LLMs and/or first configuration data, second configuration data, which may be current and/or adapted, and/or instruction data, e.g., from previous iterations of the method, for example.

In an example, the AI processing component may be based on at least one multimodal LLM. The generative AI processing component based on at least one multimodal LLM may advantageously not only process all content of the first configuration data and/or current configuration data, including or only being in the form of the image data or images, e.g., representing the objects in the room operating interface, by interpreting the image data. Different from a "normal" LLM, a multimodal LLM is able to also process multimodal data and generate multimodal data to generate the second configuration data, in particular its room operating interface, with images or pictures.

According to a second aspect of this disclosure, there are provided one or more computer program products comprising instructions which, when executed by one or more data processing apparatuses, cause the one or more data processing apparatuses to carry out the method of the first aspect of this disclosure.

The computer program product(s) may be a computer program or computer programs as such, meaning a computer program consisting of or comprising program code to be executed by the data processing apparatus, in particular computer.

Alternatively, the computer program product(s) may be a product or products such as a data storage(s), in particular computer-readable data storage medium(s), on which the computer program(s) may be temporarily or permanently stored.

According to a third aspect of this disclosure, there is provided a data processing system configured to carry out the method according to the first aspect of this disclosure.

It is noted that the above aspects, examples and features may be combined with each other irrespective of the aspect involved.

The above and other aspects of the present disclosure will become apparent from and elucidated with reference to the examples described hereinafter.

### BRIEF DESCRIPTION OF THE DRAWINGS

Exemplary embodiments will be further described with reference to Figures, wherein:
Figure 1 shows a building;
Figure 2 shows a room operating unit inside a room of the building of Fig. 1;
Figure 3 shows a data processing system;
Figure 4 shows a computer program with its elements;
Figure 5 shows a method for obtaining second configuration data for configuring the room operating unit of Fig. 2;
Figure 6 shows another computer program with its elements including at least parts of the computer program of Fig. 4;
Figure 7 shows a method for adapting current second configuration data for configuration the room operating unit of Fig. 2.

The Figures are schematic only and not true to scale. In principle, identical or like parts, elements and/or steps are provided with identical or like reference numerals in the Figures.

### DETAILED DESCRIPTION OF THE INVENTION

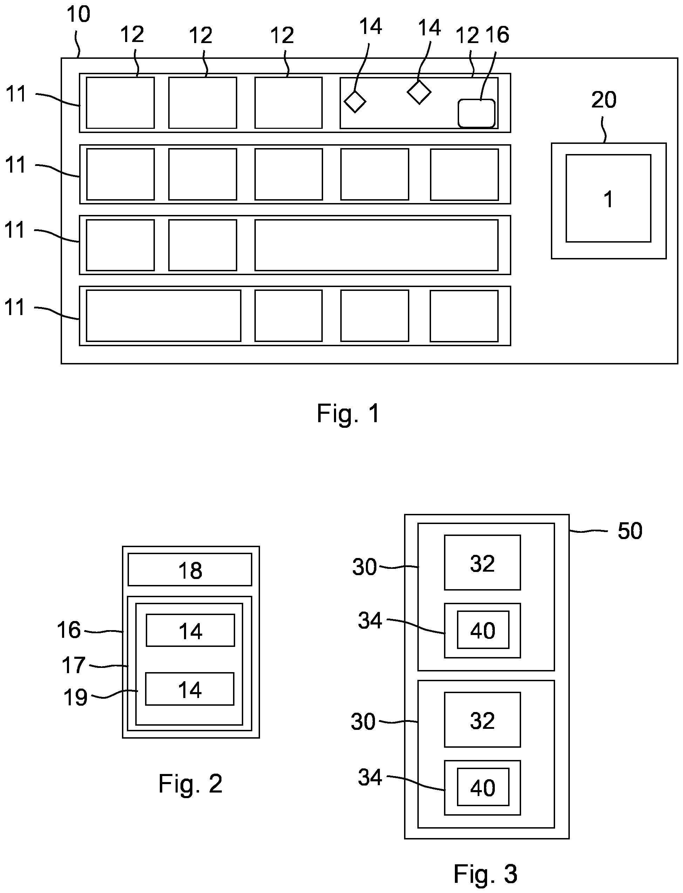

Figure 1 shows a schematic illustration of a building 10. The building 10 of this example has several floors 11 with rooms 12 on the floors 11. One of the rooms 12 inside the building 10 is exemplary shown with two electrical devices 14, which, however, may be more or less than two in number. The electrical devices 14 may for example be lighting devices, HVAC devices, electricity devices, sensor devices and/or control devices. Further, the room 12 having the electrical devices 14 has a room operating unit 16 for operating or, in other words, controlling the operating of the electrical devices 14 inside the room 12. Of course, some or all of the other rooms 12 in the building 10 may have also electrical devices 14 and/or room operating units 16, which may be configured as explained herein or similar, i.e., have a different number of electrical devices 14, different types of electrical devices 14, etc.

The building 10 may include a building management system 20, which may comprise configuration data 1 indicative of a configuration of the electrical devices 14 inside each one of the rooms 12. This configuration data 1 is herein referred to as first configuration data 1.

Figure 2 shows a schematic illustration of a room operating unit 16 having a display 17. The display 17 may be a touch display for receiving user input, based on which the room operating unit 16 may control the operation of the electrical devices 14. Alternatively, or additionally, other input means such as buttons or control wheels may be provided on the room operating unit 16 for receiving user input from a user, e.g., an occupant of the room 12 inside which the room operating unit 16 is located.

The room operating unit 16 may be configured according to second configuration data 3. In particular, the room operating unit 16, in particular a processor (not shown) thereof, may be executing software, which may be configured according to the second configuration data 3. The second configuration data 3 may be indicative of a control configuration 18 for controlling the electrical devices 14 by the room operating unit 16. Also, or alternatively, the second configuration data 3 may be indicative of a room operating interface 19 as displayed on the display 17 of the room operating unit 16. In this example, different objects, e.g., in the form of images or pictures, are representing the exemplary two electrical devices 14 and/or their functions. For example, in case the electrical devices 14 are lighting devices, by touching the display 17 in case of a touch display by a user in the areas of the objects, the lighting devices may be switched on or off.

Of course, the configuration of electrical devices 14 and the second configuration data 3 may be much more complex than the very simple example shown in Figs. 1 and 2, involving many more electrical devices 14, different types of devices 14, different functions and relationships, and so on. Hence, Figs. 1 and 2 are seen to be as examples for facilitating the understanding of this disclosure in principle only.

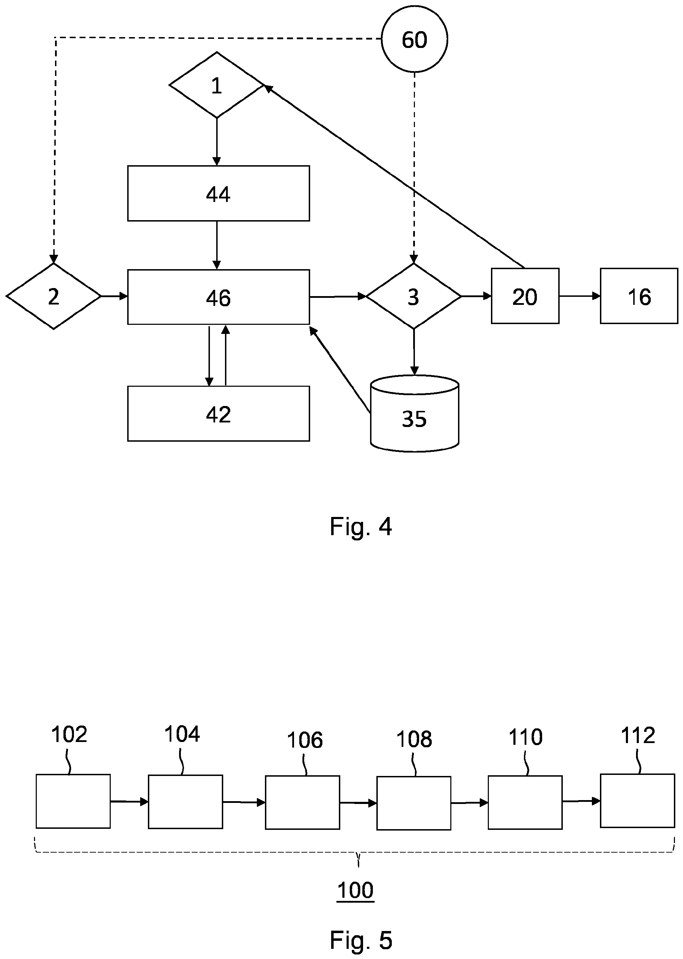

Figure 3 schematically shows a data processing system 50, which may comprise one or more data processing apparatuses 30, e.g., computers, two of which are shown for the purpose of example. The data processing system 50, in particular one or both of the data processing apparatuses 30, in particular their processors 32, may be used to carry out the method 100 as schematically illustrated in Fig. 5 and for obtaining the second configuration data 3 for configuring the room operating unit 16 as exemplary shown in Fig. 2. Each one of the exemplary two data processing apparatuses 30 comprises at least one processing unit or processor 32, e.g., a CPU, and at least one computer program product 34, e.g., in the form of a computer-readable storage medium. Computer programs 40 are stored on the computer program products 34.

Figure 4 schematically shows one or more computer elements 42, 44, 46 of the computer programs 40 in the data processing system 50, which may form parts of the computer programs 40, e.g., different program code for different functions or steps of the method 100. Specifically, a computer program 40 of one of the data processing apparatuses 30 may be comprising the computer element 44, 46, which may be in the form of one or more software codes or instructions for the processors 32. The computer program product 34 in the form of the storage medium of that data processing apparatus 30 may also comprise a database 35 as shown or that data processing apparatus 30 may at least have access thereto. The other computer program 40 of the other data processing apparatus 30 in the data processing system 50 may comprise the computer element 42. The data processing system 50 may be a distributed computing environment, where, for example, the computer elements 44, 46 may be executed on a local user data processing apparatus 30, such as any stationary or mobile computer, and the computer element 42 may be executed by a remote or server type of data processing apparatus 30, having increased processing capabilities for processing of the computer element 42. Alternatively, the computer elements 42, 44, 46 may be all provided as part of the same computer program 40 or executed by the same data processing apparatus 30.

Figure 5 schematically shows the method 100 for obtaining the second configuration data 3 for configuring the room operating unit 16 for operating electrical devices 14 inside the room 12 of the building 10 described with reference to Fig. 1. That is, the room operating unit 16 needed to be configured with the second configuration data 3. For this purpose, the second configuration data 3 needed to be obtained and provided to the room operating unit 16.

The method 100 is now exemplary explained with reference to Figs. 4 and 5, wherein the method 100 makes reference to the second configuration data 3 being indicative of the room operating interface 19 only such that the control configuration 18 may be obtained and provided in a different way. However, alternatively, or additionally, the method 100 may be used to obtain the control configuration 18 as part of the second configuration data 3.

In a first step 102 of method 100, the first configuration data 1 indicative of the configuration of the electrical devices 14 inside the room 12 is being obtained. Step 102 and all other steps provided herein with reference numerals may be carried out by the mentioned local user data processing apparatus 30. As shown in Fig. 3, the configuration data 1 may be obtained from the building management system 20 of the building 10, e.g. in the form of an information model.

Then, in a second step 104 of method 100, instruction data 2 may be obtained, which may comprise one or more instructions for processing the first configuration data 1 by the computer element 42, which may be an artificial intelligence, Al, in particular machine learning, processing component based on an AI or ML model, in particular a multimodal LLM, for obtaining the second configuration data 3. The instruction data 2 may be for example provided by a user 60 or, alternatively, for example, by the computer element 44 or any other computer element, such as computer element 46, for example. The instruction data 2 may be indicative of an expected configuration of the room operating interface 19 indicated by the second configuration data 3.

As shown, it may further be provided, in particular as part of the method 100, that the computer element 44 processes the first configuration data 1. In particular, the computer element 44 may be an analyzer of the first configuration data 1. For example, the first configuration data 1 may be in the form of one or more project files, in particular building management system configuration project files. And the computer element 44 may be a project file analyzer.

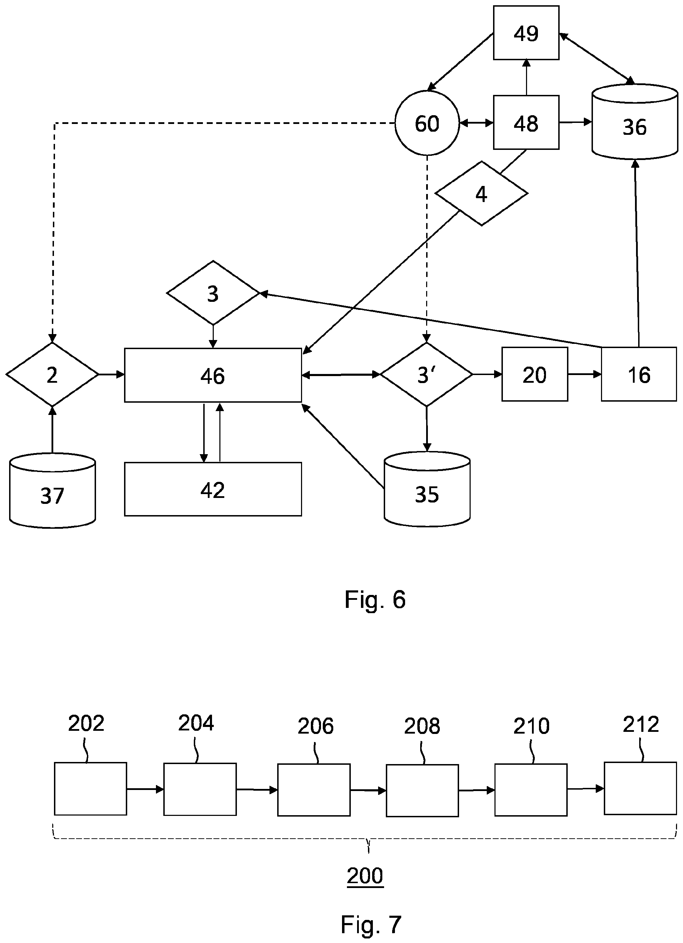

Figure 6 shows another computer program with its elements including at least parts, as shown, or an entirety or all of the computer program of Fig. 4. In Fig. 6, not all of the components or parts of the computer program of Fig. 4 are shown for the sake of clarity. The computer program shown in Fig. 6 may be configured to execute the method 200 shown in Fig. 7, which is configured for adapting current second configuration data 3 for configuring the room operating unit 16, in particular its room operating interface 19. The computer program may use or have the same computer element 42 in the form of the AI processing component 42 as in Figs. 4 and 5. Further, the computer program may use the same local user data processing apparatus 30 as the method 100 of Fig. 5 or generally a local user data processing apparatus 30, while the AI processing component 42 may be generally executed by another data processing apparatus 30 with increased processing capabilities as explained herein.

Specifically, in method 200, in a first step 102, the current configuration data 3 may be obtained, e.g., directly or indirectly from the room operating unit 16, as shown. For example, the current configuration data 3 may be also or alternatively obtained based on user input at the computer element 46.

Further, in method 200, in a second step 204, which may be before, after or in parallel to step 202, usage data 4 may be obtained, in particular at the computer element 46. Specifically, Fig. 6 shows another database 36 in the form of a usage database 36, which may contain the usage data 4, which may be indicative of a usage pattern of one more of the electrical devices 14 inside the room 12. The usage data 4 may be obtained from the room operating unit 16. For example, the database 36 may be a database of the room operating unit 16 or its usage data 4 may be obtained from a database of the room operating unit 16, in which the usage patterns may be stored based on the user input on the room operating unit 16.

As further shown in Fig. 6, the usage data 4 may be provided to the computer element 48, and from there or, alternatively, from the user 60 transmitted to the computer element 46, where it may be obtained. The computer element 48 may be a monitoring component, which may be continuously monitoring user interactions with the room operating unit 16 and storing them in the database 36. The computer element 48 may be part of the room operating unit 16 and executed by a processor thereof, for example. The room operating unit 16 may further comprise another computer element 49, which may be in the form of an analyzing component and executed by a processor of the room operating unit 16, for example. The analyzing component 49 may be analyzing the usage data 4 directly obtained from the room operating unit 4 and analyze it regarding usage patterns. Before including the user patterns in the usage data 4 for adapting the current configuration data 3, the user 60 may be provided with the usage patterns and provide feedback whether they want the usage pattern to be considered for the adapting of the current configuration data 3. In any case, the usage data 4 may, with or without being indicative of one or more usage patterns, be provided to the computer element 46. The computer element 46 may be in the form of a user interface generator, where the user 60 may provide input to the computer element 46 such that the adapting of the configuration data 3 is triggered.

Further, in a step 206 of method 200, before, after or in parallel to the steps 202, 204, instruction data 2 may be obtained. For example, this may be obtained from the user 60 and/or another database 37, which may store, for example, context information such as a desired design, style, images and similar of the room operating interface 19 after adapting the current configuration data 3. The instruction data 2 may be configured such that the adapted configuration data 3' obtained by the method 200 reflects the one or more usage patterns indicated by the usage data 4.

In step 208 of method 200, all of the previously obtained data, namely the current configuration data 3, the instruction data 2 and the usage data 4 may be provided by the computer element 46 to the AI processing component 42 for generating the adapted configuration data 3' based on the usage data 4 and the instruction data 2. In step 210 of method 200, the adapted configuration data 3' may be obtained consequently and, in step 212 of method 200, the adapted configuration data 3' may be applied on the room operating unit 16, e.g., through usage of the building management system 20 as shown.

Further, while not shown in Fig. 6 explicitly, the computer program shown therein may comprise any of the computer elements and steps or features explained with reference to Fig. 4, e.g., storing the adapted configuration data 3' in the database 35 for training the AI processing component 42, using the project file analyzer computer element 44, and similar.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art and practicing the claimed invention, from a study of the drawings, the disclosure, and the claims.

As used herein, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Further, as used herein, the phrase "at least one" or similar, e.g., "one or more of", in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that such entities may optionally be present other than the entities specifically identified within the list of entities to which the phrase "at least one" or similar refers, whether related or unrelated to those entities specifically identified. Thus, as a non-limiting example, "at least one of A and B" (or, equivalently, "at least one of A or B" or, equivalently "at least one of A and/or B" or, equivalently "one or more of A and B", "one or more of A or B", or "one or more of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

As used herein, the phrase "being indicative of" may for example mean "reflecting" and/or "comprising". Accordingly, an entity, element and/or step referred to herein as "being indicative of [...]" can be synonymously or interchangeably used herein with one, two or all of said entity, element and/or step "comprising [...]" and said entity, element and/or step "reflecting [...]". Further, as used herein, phrases such as "based on", "related" or "relating", "associated" and similar are not to be seen exclusively in terms of the entities, elements and/or steps to which they are referring, unless otherwise stated. Instead, these phrases are to be understood inclusively, unless otherwise stated, in that, for example, an entity, element or step referring by any of these phrases or similar, e.g., being "based on", an or another entity, element or step, does not exclude that the respective entity, element or step may be further or also "based on" any other entity, element or step than the one to which it refers.

The designation of methods and steps as first, second, etc. as provided herein is merely intended to make the methods and their steps referenceable and distinguishable from one another. By no means does the designation of methods and steps constitute a limitation of the scope of this disclosure. For example, when this disclosure describes a third step of a method, a first or second step of the method do not need to be present yet alone be performed before the third step unless they are explicitly referred to as being required per se or before the third step. Moreover, the presentation of methods or steps in a certain order is merely intended to facilitate one example of this disclosure and by no means constitutes a limitation of the scope of this disclosure. Generally, unless no explicitly required order is being mentioned, the methods and steps may be carried out in any feasible order. Specifically, the terms first, second, third or (a), (b), (c) and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In the context of the present invention any numerical value indicated is typically associated with an interval of accuracy that the person skilled in the art will understand to still ensure the technical effect of the feature in question. As used herein, the deviation from the indicated numerical value is in the range of ± 10%, and preferably of ± 5%. The aforementioned deviation from the indicated numerical interval of ± 10%, and preferably of ± 5% is also indicated by the terms "about" and "approximately" used herein with respect to a numerical value.

Any reference signs in the claims should not be construed as limiting the scope.

## Claims

1. A method (200) for adapting configuration data (3) for configuring a room operating unit (16) for operating electrical devices (14) inside a room (12) of a building (10), the method (200) comprising:
- obtaining current configuration data (3) for configuring the room operating unit (16);
- obtaining usage data (4) indicative of a usage of the room operating unit (16) based on the current configuration data (3);
- obtaining instruction data (2) comprising one or more instructions for processing the usage data (4) and the current configuration data (3) by an Artificial Intelligence, Al, processing component (42) for obtaining the adapted configuration data (3');
- providing the current configuration data (3), the usage data (4) and the instruction data (2) for processing by the AI processing component (42); and
- obtaining the adapted configuration data (3') from the processing by the AI processing component (42).

2. The method (200) of claim 1, wherein the usage data (4) is indicative of a usage pattern of one or more of the electrical devices (14) inside the room (12) and the instruction data (2) is configured such that the adapted configuration data (3') reflects the usage pattern.

3. The method (200) of claim 1 or 2, wherein the current configuration data (3) and the adapted configuration data (3') are indicative of a control configuration (18) for controlling the electrical devices (14) by the room operating unit (16).

4. The method (200) of any one of the previous claims, wherein the current configuration data (3) and the adapted configuration data (3') are indicative of a room operating interface (19) to be displayed by a display (17) of the room operating unit (16).

5. The method (200) of claim 4, wherein at least one of the one or more instructions of the instruction data (2) is indicative of an adapted configuration of the room operating interface (19) based on the usage data (4).

6. The method (200) of claim 4 or 5, wherein the current configuration data (3) and the adapted configuration data (3') are indicative of objects representing the electrical devices (14) and/or functions of the electrical devices (14) in the room operating interface (17).

7. The method (200) of claim 6, wherein the adapted configuration data (3') comprises at least one more object compared to the current configuration data (3).

8. The method (200) of any one of the previous claims, wherein the current configuration data (3) has been obtained from an AI processing component (42) using first configuration data (1) from a building management system (20) of the building (10), the first configuration data (1) being indicative of a configuration of the electrical devices (14) inside the room (12).

9. The method (200) of claim 8, wherein the configuration of the electrical devices (14) comprises one or more of: a location of the electrical devices (14) inside the building (10), a function of the electrical devices (14), or a relationship between the electrical devices (14).

10. The method (200) of any one of the previous claims, wherein the electrical devices (14) are at least from one or more of: a lighting device, an HVAC device, an electricity supply device, a sensor device, or a control device.

11. The method (200) of any one of the previous claims, wherein the adapted configuration data (3') is applied on the room operating unit (16).

12. The method (200) of any one of the previous claims, wherein the AI processing component (42) is a generative AI processing component based on at least one Large Language Model, LLM.

13. The method (200) of claim 12, wherein the AI processing component (42) is based on at least one multimodal LLM.

14. One or more computer program products (34, 40) comprising instructions which, when executed by one or more data processing apparatuses (30), cause the one or more data processing apparatuses (30) to carry out the method (200) of any one of the previous claims.

15. A data processing system (50) configured to carry out the method (200) of any one of claims 1 to 13.
